# EUROPÄISCHE PATENTANMELDUNG

(11) **EP 1 284 460 A2**
(43) Veröffentlichungstag der Anmeldung: **19.02.2003**
(21) Anmeldenummer: 02017498.3
(22) Anmeldetag: 06.08.2002
(51) Int. Cl.: G06F 17/30

(54) **Datenverarbeitungseinrichtung und Verfahren zur Verwaltung einer Videodatenbank**

(30) Priorität: 18.08.2001 DE 10140612
(71) Anmelder: Pixelboxx GmbH, 44135 Dortmund (DE)
(72) Erfinder: Strieder, Kai, 59439 Holzwickede (DE); Schulte, Eberhard, 44787 Bochum (DE)
(74) Vertreter: von Kirschbaum, Alexander, Dipl.-Ing.

(57) **Zusammenfassung**

Eine Datenverarbeitungseinrichtung sowie ein Verfahren zur Verwaltung einer Videodatenbank weisen eine Speichereinrichtung (24) zum Speichern von Videodateien (10) auf. Eine Auswahleinrichtung (12) dient zum automatischen Erzeugen signifikanter Einzelbilder (14) aus den Videodateien (10). Die signifikaten Einzelbilder (14) werden mittels einer Verknüpfungseinrichtung (20) mit den Videodateien (10) verknüpft. Ferner werden die Videodateien mit zugehörigen Stichwortdateien (22) verknüpft. Beim Durchsuchen der Datenbank (24) ist es somit lediglich erforderlich, signifikante Einzelbilder (14) mit einer Vorauswahldatei (16) oder einer Ansichtsdatei (18) auf einem Bildschirm (26) darzustellen. Hierdurch ist die erforderliche Menge an zu übertragenden Daten erheblich reduziert.

## Beschreibung

Die Erfindung betrifft eine Datenverarbeitungseinrichtung sowie ein Verfahren zur Verwaltung einer Videodatenbank.

Die Verwaltung von Filmmaterial, wie beispielsweise Spielfilme, Kurzfilme, Werbefilme etc., kann in digitaler Form mit Hilfe von Videodatenbanken erfolgen. Zum Auffinden bestimmter Videodaten, beispielsweise zu einem bestimmten Sachgebiet, sind die einzelnen Filme mit Stichwörtern verknüpft. Nach diesen Stichwörtern kann mit Hilfe einer Suchfunktion nach den entsprechenden Filmen recherchiert werden. Als Stichwortdateien werden die einzelnen Filme entweder explizit verschlagwortet oder ein Fließtext wird mit der entsprechenden Videodatei verknüpft. Innerhalb der Verschlagwortungen und den Voll- bzw. Fließtextdateien kann nach einzelnen Begriffen recherchiert werden, so dass beispielsweise Filme einer bestimmten Kategorie oder eines bestimmten Fachgebiets recherchierbar sind.

Nach der Durchführung der Recherche erhält der Benutzer der entsprechenden Videodatenbank beispielsweise eine Liste der recherchierten Filme. Der Benutzer muss nun zumindest den Anfang jedes recherchierten Filmes betrachten, um festzustellen, ob es sich um den gesuchten bzw. einen für die entsprechenden Anforderungen geeigneten Film handelt. Hierzu müssen große Datenmengen von der Videodatenbank beispielsweise auf einen externen Rechner oder den Arbeitsspeicher eines Rechners übertragen werden, um zumindest Teile des Films betrachten zu können. Insbesondere beim Abfragen von Videodatenbanken über das Internet oder andere Netzwerke ist diese Datenübertragung äußerst zeitaufwändig und kostenintensiv. Insbesondere ist das Recherchieren einzelner Filme, von denen nur wenige Informationen bekannt sind, sehr zeitaufwändig.

Aufgabe der Erfindung ist es, die Verwaltung einer Videodatenbank zu vereinfachen und somit eine schnellere Recherche nach Videodaten zu ermöglichen.

Die Lösung der Aufgabe erfolgt erfindungsgemäß durch die Merkmale des Patentanspruchs 1, 8 bzw. 12.

Die erfindungsgemäße Datenverarbeitungseinrichtung weist eine Speichereinrichtung zum Speichern von Videodateien auf. Bei der Speichereinrichtung handelt es sich vorzugsweise um einen externen Rechner oder eine externe Speichereinrichtung, die über Netzwerke, insbesondere über das Internet, abgefragt werden kann. Ferner weist die Datenverarbeitungseinrichtung eine Anzeigeeinrichtung, wie einen Bildschirm, zur Darstellung von Videodateien bzw. Einzelbildern auf.

Erfindungsgemäß wird durch eine Auswahleinrichtung von den Videodateien, d.h. den Videofilmen, automatisch eine vorgegebene Anzahl an signifikanten Einzelbildern ausgewählt. Diese Einzelbilder sind jeweils mit der entsprechenden Videodatei verknüpft. Das erfinderische Vorsehen einer derartigen Auswahleinrichtung beruht auf der Erkenntnis, dass eine Videodatei von einem Benutzer bereits durch das Betrachten von wenigen Einzelbildern sehr genau eingeschätzt und beurteilt werden kann. Bei dem Recherchieren nach bekannten Filmen wurde festgestellt, dass bereits bei einer Auswahl von 9 oder 25 Einzelbildern des Videos vom Betrachter das Video häufig eindeutig erkannt wird.

Die Darstellung nur einzelner signifikanter Bilder der Videodatei hat den Vorteil, dass eine erheblich geringere Datenmenge übermittelt werden muss. Ferner ist es möglich, die Einzelbilder derart auszuwählen, dass sie vorzugsweise über die gesamte Länge des Filmes regelmäßig oder nach gewissen Vorgaben verteilt sind. Hierdurch ist es möglich, den Betrachter auf einen Blick einen Überblick über die gesamte Videodatei zu verschaffen. Insbesondere können signifikante Einzelbilder beispielsweise gegen Ende der Videodatei ausgewählt werden. Dies hat den Vorteil, dass gegenüber herkömmlichen Methoden der Videofilm nicht bis zu diesem Bereich des Films vorgespult werden muss.

Die Auswahl der signifikanten Bilder erfolgt erfindungsgemäß automatisch durch die erfindungsgemäße Auswahleinrichtung. Vorzugsweise wird eine Anzahl von 9, 16, 25 usw. Einzelbildern einer Videodatei erzeugt, so dass diese in einem Rechteck von 3 x 3, 4 x 4, 5 x 5 usw. Bildern von der Anzeigeeinrichtung dargestellt werden können. Als signifikante Einzelbilder kann beispielsweise die Gesamtzahl der Bilder des Filmes durch die Zahl der signifikanten Einzelbilder dividiert werden und sodann jedes n-te Bild als standardisiertes Einzelbild aus dem Video ausgewählt werden. Bei einem Videofilm mit beispielsweise 100 Bildern und einer Darstellung von 25 Einzelbildern wird somit jedes vierte Bild des Videos als Einzelbild dargestellt. Die signifikanten Einzelbilder sind somit symmetrisch über die gesamte Länge des Videos verteilt.

Ebenso ist es möglich, vorzugeben, dass an gewissen Stellen des Videos, beispielsweise in der Mitte oder am Ende, Bildhäufungen stattfinden, so dass der Abstand ausgewählter Bilder in diesem Bereich kleiner ist.

Durch die Auswahleinrichtung wird vorzugsweise gemäß der Erfindung eine Vorauswahldatei mit einer geringen Anzahl an Einzelbildern erzeugt. Bereits anhand dieser Vorauswahldatei ist für den Benutzer das Recherchieren nach bestimmten Filmen oder die Relevanz bestimmter Filme hinsichtlich eines Recherchegebiets erleichtert.

Das Generieren einer Vorauswahldatei hat den Vorteil, dass von dem Benutzer der erfindungsgemäßen Datenverarbeitungseinrichtung ein Video betrachtet werden kann, ohne hierzu das Video abspielen zu müssen. Hierdurch ist die erforderliche Menge an Daten, die übertragen werden muss, erheblich reduziert. Dies ist insbesondere bei Netzwerken, beispielsweise bei Verwendung des Internet, von großem Vorteil. Die Vorauswahldatei hat vorzugsweise eine geringe Anzahl an Einzelbildern, vorzugsweise weniger als 10 und besonders bevorzugt weniger als 5 Einzelbilder.

Bei einer besonders bevorzugten Ausführungsform der Erfindung besteht zusätzlich zu einer Vorauswahldatei eine Ansichtsdatei. Die Ansichtsdatei weist hierbei eine größere Anzahl an Einzelbildern auf als die Vorauswahldatei. Insbesondere ist festgelegt, dass die Vorauswahldatei nur vier Einzelbilder aufweist. Die Vorauswahldatei wird genutzt, um unmittelbar nach der Durchführung der Suche sämtliche aufgefundenen Vorauswahldateien auf dem Bildschirm darzustellen. Durch Anklicken oder anderes Auswählen einer dieser Vorauswahldateien wird diese sodann vorzugsweise nicht nur vergrößert, sondern automatisch die Ansichtsdatei aufgerufen, so dass dem Benutzer eine größere Anzahl an Informationen zur Verfügung gestellt werden kann. Die Ansichtsdatei hat hierbei sodann vorzugsweise 9, 16, 25 oder mehr Einzelbilder.

Die Auswahl der Einzelbilder erfolgt vorzugsweise derart, dass grundsätzlich das erste Bild des Videos nicht verwendet wird, da es sich hierbei häufig um eine so genannte Schwarzblende handelt, die zur Wiedererkennung bzw. zur Recherche des Videos nicht erforderlich ist. Vorzugsweise wird jedoch beim Erzeugen von Ansichtsdateien mit vorzugsweise 9 oder mehr Einzelbildern auch das erste und letzte Bild des Videos dargestellt, da die Information, ob ein Video mit einer Schwarzblende beginnt oder endet, für den Betrachter beispielsweise wichtig ist, um beurteilen zu können, ob das Video überarbeitet werden muss oder nicht.

Vorzugsweise erfolgt neben der Verknüpfung der Einzelbilder bzw. der Vorauswahldatei und ggf. der Ansichtsdatei mit den entsprechenden zugehörigen Videodateien auch eine Verknüpfung jeweils mindestens einer Stichwortdatei direkt mit der Videodatei und/oder über die Einzelbilder bzw. die Vorauswahldatei mittelbar mit der Videodatei. Als Stichwortdatei kann eine Verschlagwortung der einzelnen Videos vorgesehen sein. Ebenso kann als Stichwortdatei ein Volltext der entsprechenden Videodatei zugewiesen werden.

Vorzugsweise weist die erfindungsgemäße Datenverarbeitungseinrichtung eine Sucheinrichtung zur Eingabe von Stichwörtern auf. Die erfindungsgemäße Sucheinrichtung durchsucht automatisch die Stichwortdateien. Anschließend werden die mit den Stichwortdateien verknüpften Vorauswahldateien automatisch auf der Anzeigeeinrichtung dargestellt. Auf der Anzeigeeinrichtung werden somit vorzugsweise sämtliche recherchierten Vorauswahldateien dargestellt. Hierbei kann beispielsweise eine minimale Größe der darzustellenden Vorauswahldateien definiert werden, so dass die einzelnen dargestellten Einzelbilder stets erkennbar bleiben. Beispielsweise durch einen Mausklick kann eine entsprechende Vorauswahldatei ausgewählt werden, so dass die Vorauswahldatei vergrößert und auf der gesamten Anzeigeeinrichtung, vorzugsweise als Ansichtsdatei mit mehr Einzelbildern, dargestellt wird.

Vorzugsweise weist die erfindungsgemäße Datenverarbeitungseinrichtung ferner eine Übertragungseinrichtung zum Übertragen einer Videodatei auf. Dies erfolgt insbesondere nach Auswahl einer mit der Videodatei verknüpften Vorauswahldatei. Hierbei kann es sich beispielsweise um Datenfernübertragung handeln.

Die Erfindung betrifft ferner ein Verfahren zur Verwaltung einer Videodatenbank. Das erfindungsgemäße Verfahren weist hierbei als ersten Schritt das Speichern von Videodaten in einer Speichereinrichtung, wie einer Datenbank, auf. Anschließend werden aus den Videodateien erfindungsgemäß signifikante Einzelbilder zur Schnell-Identifizierung der Videodateien, vorzugsweise mit Hilfe der vorstehend beschriebenen Auswahleinrichtung, erzeugt. Die Einzelbilder werden automatisch mit der Videodatei verknüpft. Ferner besteht in einem weiteren Schritt die Möglichkeit der Darstellung der Einzelbilder auf einer Anzeigeeinrichtung, wie einem Bildschirm. Das Verfahren weist ebenfalls die vorstehend anhand der Datenverarbeitungsvorrichtung beschriebenen Vorteile, insbesondere eine erhebliche Verringerung der zu übertragenden Datenmengen, auf.

Vorzugsweise wird erfindungsgemäß eine Vorauswahldatei aus einer geringen Anzahl an Einzelbildern erzeugt. Ebenso kann vorzugsweise eine Vorauswahldatei mit einer geringen Anzahl an Bildern und eine Ansichtsdatei mit einer größeren Anzahl an Bildern, vorzugsweise mindestens 9 Bildern, erzeugt werden. Hierbei ist die Vorauswahldatei und/oder die Ansichtsdatei jeweils mit der entsprechenden Videodatei verbunden.

Ein weiteres erfindungsgemäßes Verfahren zum Verwalten von Videodaten ist hiervon unabhängig und betrifft das Auffinden bzw. Recherchieren von in einer entsprechenden Datenbank bzw. Speichereinrichtung gespeicherten Videodatei. Hierzu erfolgt zuerst die Eingabe eines Stichworts oder Suchbegriffs in eine Sucheinrichtung. Anschließend werden von der Sucheinrichtung die Stichwortdateien, die mit den entsprechenden Videodateien verknüpft sind, automatisch durchsucht. Im nächsten Schritt erfolgt erfindungsgemäß die Anzeige von signifikanten Einzelbildern der erstellten Videodateien auf einer Anzeigeeinrichtung. Die signifikanten Einzelbilder sind hierbei automatisch mittels einer Auswahleinrichtung, vorzugsweise wie vorstehend anhand der Vorrichtung beschrieben, erstellt worden.

Zunächst erfolgt hierbei vorzugsweise wiederum zuerst die Darstellung von Vorauswahldateien mit beispielsweise 4 Einzelbildern und anschließend bei Auswahl einer entsprechenden Vorauswahldatei die Darstellung einer Ansichtsdatei mit mehr als 4, vorzugsweise mehr als 9 Einzelbildern.

Vor oder nach dem Betrachten der Ansichtsdatei kann eine automatisch angezeigte Vorauswahldatei ausgewählt und die mit der Vorauswahldatei verbundene Videodatei an eine Datenverarbeitungseinrichtung, beispielsweise über das Internet, übermittelt werden.

Die einzelnen vorstehenden Verfahrensschritte können hierbei jeweils mit Zugangsberechtigungen versehen werden, so dass beispielsweise ein beliebiger Benutzer die Vorauswahldateien betrachten kann, jedoch nicht automatisch zum Herunterladen der Vidoedateien berechtigt ist.

Ferner betrifft die Erfindung ein Speichermedium, wie eine CD, auf der ein Programmcode zur Durchführung der vorstehend beschriebenen Verfahren gespeichert ist.

Nachfolgend wird die Erfindung anhand einer bevorzugten Ausführungsform unter Bezugnahme auf die anliegenden Zeichnungen näher erläutert.

Es zeigen:

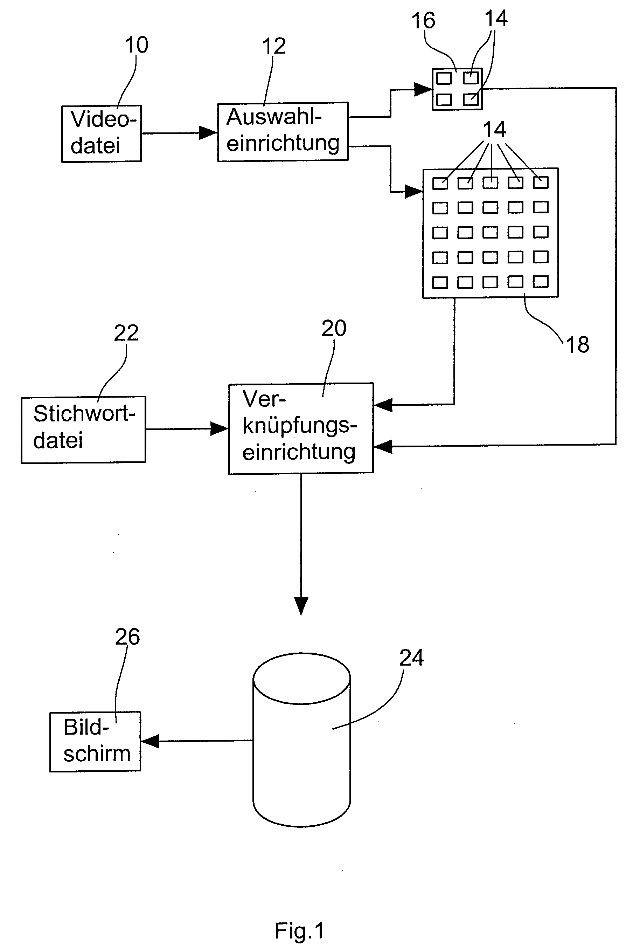

- Fig. 1: eine schematische Darstellung des Einlesens von Videodateien in eine erfindungsgemäße Datenverarbeitungseinrichtung und
- Fig. 2: eine schematische Darstellung des Suchens bzw. Recherchierens nach gespeicherten Videodateien.

Von einer Videodatei 10 wird in einem ersten Schritt durch eine Auswahleinrichtung 12 eine vorgegebene Anzahl an Einzelbildern 14 erzeugt. Hierbei wird eine Vorauswahldatei 16 mit vier Einzelbildern 14 sowie eine Ansichtsdatei 18 mit im dargestellten Ausführungsbeispiel 25 Einzelbildern 14 erzeugt. Anschließend erfolgt in einer Verknüpfungseinrichtung 20 ein Verknüpfen der Videodatei 10 mit der Vorauswahldatei 16 und der Ansichtsdatei 18. Ferner erfolgt in der Verknüpfungseinrichtung 20 eine Verknüpfung mit einer Stichwortdatei 22, bei der es sich um einen Volltext oder eine Verschlagwortung zu der entsprechenden Videodatei 10 handeln kann. Die verknüpften Dateien 10,16,18,22 werden sodann in einer Speichereinrichtung 24 abgelegt. Durch eine entsprechende Abfrage der Speichereinrichtung 24 ist eine Darstellung der Vorauswahldatei 16 oder der Ansichtsdatei 18 auf einem Bildschirm 26 möglich. Selbstverständlich können diese Dateien auch während des Speichervorgangs zu Überprüfungszwecken auf dem Bildschirm 26 dargestellt werden.

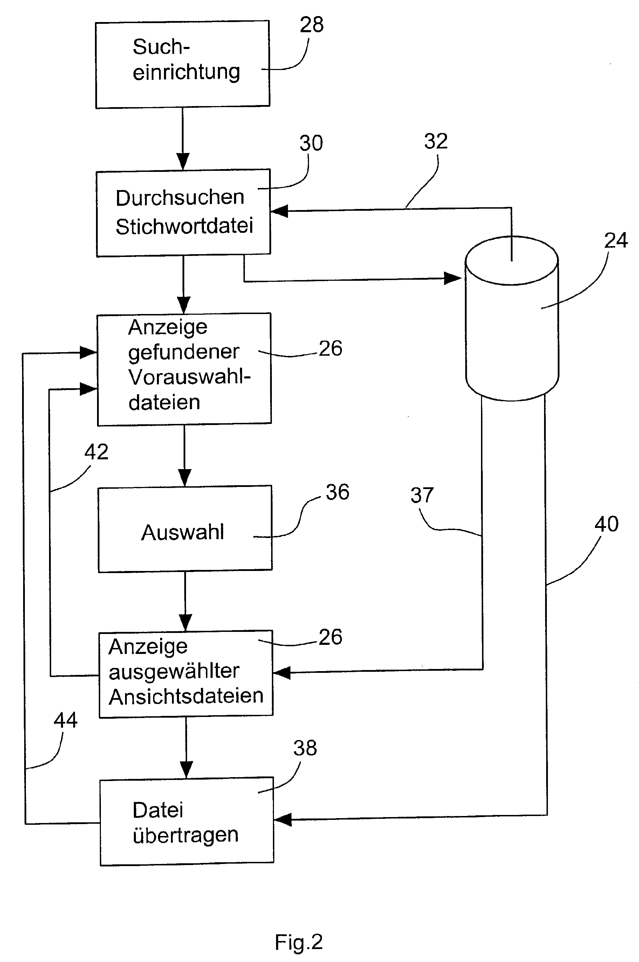

Insbesondere erfolgt eine Darstellung auf dem Bildschirm 26 aber durch das anhand Fig. 2 im Folgenden beschriebene Such-/Rechercheverfahren. In einem ersten Schritt wird in eine Sucheinrichtung 28 eine oder mehrere Suchbegriffe eingegeben. Im nächsten Schritt 30 erfolgt ein automatisches Durchsuchen der Stichwortdateien 22. Das Durchsuchen der Stichwortdateien 22 erfolgt auf der Speichereinrichtung bzw. der Datenbank 24. Nach einer teilweisen oder vollständigen Durchsuchung der Speichereinrichtung 24 erfolgt eine Übertragung der Vorauswahldateien 16, wie durch den Pfeil 32 dargestellt. Die Vorauswahldateien können sodann auf dem Bildschirm 26 im nächsten Schritt angezeigt werden. Durch Anklicken einer Vorauswahldatei erfolgt eine Auswahl im Schritt 34. Durch Auswählen einer bestimmten Vorauswahldatei 16 erfolgt die Darstellung der mit der Vorauswahldatei 16 verknüpften Ansichtsdatei 18 auf dem Bildschirm 26. Hierzu wird vorzugsweise die entsprechende Ansichtsdatei 18 von der Datenbank, wie durch den Pfeil 37 dargestellt, heruntergeladen. Es ist somit vermieden, dass sämtliche Ansichtsdateien entsprechend der Vorauswahldateien übertragen werden müssen. Hierdurch ist die Menge der zu übertragenden Daten weiter reduziert.

Bei dem dargestellten Ausführungsbeispiel ist es nach dem Betrachten der Ansichtsdatei 18 möglich, diese, beispielsweise mittels Datenfernübertragung, auf einen externen Computer im Schritt 38 zu übertragen. Hierbei erfolgt wiederum ein unmittelbarer Zugriff auf die Speichereinrichtung 24, wie durch den Pfeil 40 dargestellt. Eine derartige Übertragung der Videodatei kann auch unmittelbar nach dem Anzeigen der gefundenen Vorauswahldateien 16 erfolgen, wenn beispielsweise ein Anzeigen der Ansichtsdatei 18 nicht gewünscht ist.

Nach dem Anzeigen einer ausgewählten Ansichtsdatei kann diese wieder geschlossen werden, so dass, wie durch den Pfeil 42 dargestellt, wieder sämtliche gefundenen Vorauswahldateien 16 dargestellt werden. Dieser Schritt zurück zur Anzeige der gefundenen Vorauswahldateien kann selbstverständlich auch nach der Übertragung einer einzelnen Videodatei (Schritt 38), wie durch den Pfeil 44 dargestellt, erfolgen.

## Patentansprüche

1. Datenverarbeitungseinrichtung zur Verwaltung einer Videodatenbank, mit
einer Speichereinrichtung (24) zum Speichern von Videodateien (10),
einer Auswahleinrichtung (12) zum automatischen Auswählen signifikanter Einzelbilder (14) aus den Videodateien (10),
einer Verknüpfungseinrichtung (20) zum Verknüpfen der Einzelbilder (14) mit den Videodateien (10).

2. Datenverarbeitungseinrichtung nach Anspruch 1, **dadurch gekennzeichnet, dass** die Auswahleinrichtung eine Vorauswahldatei (16) mit einer geringen Anzahl, vorzugsweise weniger als 10, besonders bevorzugt weniger als 5 Einzelbildern erzeugt und die Verknüpfungseinrichtung (20) die Vorauswahldatei (16) mit den Videodateien (10) verknüpft.

3. Datenverarbeitungseinrichtung nach Anspruch 1 oder 2, **dadurch gekennzeichnet, dass** die Auswahleinrichtung (12) eine Ansichtsdatei (18) mit vorzugsweise mindestens 9, insbesondere mindestens 16 und besonders bevorzugt mindestens 15 Einzelbildern (14) erzeugt und die Verknüpfungseinrichtung (20) die Ansichtsdatei (18) mit den Videodateien (10) verknüpft.

4. Datenverarbeitungseinrichtung nach einem der Ansprüche 1-3, **dadurch gekennzeichnet, dass** die Verknüpfungseinrichtung (20) jeweils eine Stichwortdatei (22) mit der zugehörigen Videodatei (10) verknüpft.

5. Datenverarbeitungseinrichtung nach Anspruch 4, **gekennzeichnet durch** eine Sucheinrichtung (28) zur Eingabe von Stichwörtern, wobei die Sucheinrichtung (28) automatisch die Stichwortdateien (22) durchsucht und die Anzeigeeinrichtung (26) die mit den gefundenen Stichwortdateien (22) verknüpften Vorauswahldateien (16) darstellt.

6. Datenverarbeitungseinrichtung nach Anspruch 5, **dadurch gekennzeichnet, dass** durch die Auswahl einer dargestellte Vorauswahldatei (16) die Anzeigeeinrichtung (26) die Ansichtsdatei (18) darstellt.

7. Datenverarbeitungseinrichtung nach einem der Ansprüche 2-6, **gekennzeichnet durch** eine Übertragungseinrichtung zum Übertragen einer Videodatei (10) nach der Auswahl einer mit der Videodatei verknüpften Vorauswahldatei (16) oder einer Ansichtsdatei (18).

8. Verfahren zur Verwaltung einer Videodatenbank, mit den Schritten:
- Speichern von Videodateien (10) in einer Speichereinrichtung (24),
- Erzeugen signifikanter Einzelbilder (14) aus den Videodateien (10) zur Schnell-Identifizierung der Videodateien (10),
- Verknüpfen der Einzelbilder (14) mit den Videodateien (10),
- Darstellen der Einzelbilder (14) auf einer Anzeigeeinrichtung (26).

9. Verfahren nach Anspruch 8, bei welchem eine Vorauswahldatei (16) aus einer geringen Anzahl, vorzugsweise weniger als zehn, besonders bevorzugt weniger als fünf Einzelbildern (14) erzeugt wird und die Vorauswahldatei (16) mit der Videodatei (10) verknüpft wird.

10. Verfahren nach Anspruch 8 oder 9, bei welchem eine Ansichtsdatei (18) mit vorzugsweise mindestens 9, insbesondere mindestens 16 und besonders bevorzugt mindestens 25 Einzelbildern (14) erzeugt wird und die Ansichtsdatei (18) mit der Videodatei (10) verknüpft wird.

11. Verfahren nach einem der Ansprüche 8-10, bei welchem jeweils eine Stichwortdatei (22) mit der dazugehörigen Videodatei verknüpft wird und durch Eingabe eines Stichwortes in eine Sucheinrichtung (28) ein automatisches Durchsuchen der Stichwortdateien (22) erfolgt.

12. Verfahren zur Verwaltung einer Videodatenbank, mit den Schritten:
- Eingabe eines Stichworts in eine Sucheinrichtung (28),
- automatisches Durchsuchen von mit Videodateien (10) verknüpften Stichwortdateien (22) und
- automatisches Anzeigen von signifikanten Einzelbildern (14) der ermittelten Videodateien (10) auf einer Anzeigeeinrichtung (26), wobei die signifikanten Einzelbilder (14) automatisch mittels einer Auswahleinrichtung (12) erstellt werden.

13. Verfahren nach Anspruch 12, bei welchem nach dem Durchsuchen der Stichwortdateien (22) Vorauswahldateien (16) mit einer geringen Anzahl, vorzugsweise weniger als 10 und besonders bevorzugt weniger als 5 Einzelbildern (14) angezeigt werden.

14. Verfahren nach Anspruch 13, bei welchem durch Auswahl einer Vorauswahldatei (16) eine Ansichtsdatei (18) mit vorzugsweise mindestens 9, insbesondere mindestens 16 und besonders bevorzugt mindestens 25 Einzelbildern angezeigt wird.

15. Verfahren nach Anspruch 13 oder 14, bei welchem nach einer entsprechenden Auswahl eine mit einer ausgewählten Vorauswahldatei (16) oder einer Ansichtsdatei (18) verknüpfte Videodatei (10) an eine Datenverarbeitungseinrichtung übermittelt wird.

16. Speichermedium mit einem Programmcode zur Durchführung des Verfahrens nach einem der Ansprüche 8-15.
